# EUROPEAN PATENT APPLICATION

(11) **EP 1 672 889 A1**
(43) Date of publication of application: **21.06.2006**
(21) Application number: 05027348.1
(22) Date of filing: 14.12.2005
(51) Int. Cl.: H04M 1/725, H04Q 7/32

(54) **Call processing in a mobile station with consideration of a user schedule**

(30) Priority: 14.12.2004 KR 2004105780
(71) Applicant: LG Electronics Inc., Yongdungpo-gu Seoul (KR)
(72) Inventor: Kim, Jong-Hwan, Dongjak-Gu Seoul (KR)
(74) Representative: Urner, Peter

(57) **Abstract**

A method for processing a wireless communication in a mobile station comprises receiving an incoming call signal that indicates that the wireless communication is available for reception by the mobile station. The method also comprises searching a schedule set to the mobile station and determining whether the incoming call signal is received during a scheduled time period set to the mobile station. The method also comprises determining a reception mode for the reception of the wireless communication at the mobile station based on whether the incoming call signal is received during the scheduled time period set to the mobile station. The reception mode may a ring mode, a vibration mode, or a mute mode. The schedule may be predefined by a user. The method may further comprise receiving the wireless communication in vibration mode if the incoming call signal is received during the scheduled time period.

## Description

### FIELD OF THE INVENTION

The present invention relates generally to a mobile station and, more particularly, to call processing in a mobile station.

### BACKGROUND OF THE INVENTION

A mobile station enables wireless communication within a base station (BS) service area through a through a switching control of a mobile switching center (MSC). The communication includes voice communication, data communication (e.g., signs, numbers, and text), and multimedia communication (e.g., an image signal).

The mobile station may provide an on-line services such as an on-line gaming, a wireless internet service, a video-on-demand (VOD) function, and a file download function, as well as message functions such as a chatting, instant messaging, text messaging, multimedia messaging, and e-mail. The mobile station also provides calling functions such as voice calling and video calling, camera functions such as moving and still image photography, and additional functions such as a scheduler, a telephone directory search, a calculator, a memo note, a called content recording, a mobile station state setting, a calendar search, a world time search, a timer alarm setting, a moving image replay, and a music file replay.

Using the scheduler, the mobile station enhances user convenience by providing a scheduler function to enable a user to manage her schedule, and thereby keep track of appointments and meeting times, for example. The scheduler may include a reception notifying function to notify the user of a call or a message received. The scheduler may sound an alarm or bell, or vibrate, to remind the user of an appointment. The user may thus preset his schedule to the mobile station to receive such reminders.

However, since the user schedule is preset and the preset schedule receives alarm signals indicating appointment times, a call transmitted or received during a scheduled appointment time may not be properly processed.

### SUMMARY OF THE INVENTION

Accordingly, the present invention is directed to call processing in a mobile station that substantially obviates one or more problems due to limitations and disadvantages of the related art.

An object of the present invention is to provide call processing in a mobile station that considers a user schedule.

Another object of the present invention is to provide call processing in a mobile station such that a call may be processed for transmission and/or reception based on a preset user schedule.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, in one embodiment, a method for processing a wireless communication in a mobile station comprises receiving an incoming call signal that indicates that the wireless communication is available for reception by the mobile station: The method also comprises searching a schedule set to the mobile station and determining whether the incoming call signal is received during a scheduled time period set to the mobile station. The method also comprises determining a reception mode for the reception of the wireless communication at the mobile station based on whether the incoming call signal is received during the scheduled time period set to the mobile station.

The reception mode may be one the group comprising a ring mode, a vibration mode, and a mute mode. The schedule set to the mobile station may be predefined by a user. The method may further comprise receiving the wireless communication in vibration mode or mute mode if the incoming call signal is received during the scheduled time period set to the mobile station. The method may further comprise receiving the wireless communication in ring mode if the incoming call signal is received during an unscheduled time period. The schedule set to the mobile station may comprise at least one of a user name, a user telephone number, a schedule content, a schedule starting date and time, a schedule finishing date and time, a schedule alarm, and a schedule repetition option. The schedule set to the mobile station may also comprise a telephone number from which the wireless communication may be received during the scheduled time period set to the mobile station.

In another embodiment, a method for processing a wireless communication in a mobile station comprises attempting transmission of the wireless communication from a first mobile station to a second mobile station. The method also comprises searching a schedule set to the second mobile station and determining whether the attempted transmission of the wireless communication to the second mobile station is during a scheduled time period set to the second mobile station. The method also comprises determining whether to execute the transmission of the wireless communication to the second mobile station based on whether the attempted transmission of the wireless communication to the second mobile station is during the scheduled time period set to the second mobile station.

The method may further comprise displaying, at the first mobile station, the schedule set to the second mobile station. The method may further comprise receiving input from a user of the first mobile station regarding whether to execute the transmission of the wireless communication to the second mobile station, based on the schedule displayed at the first mobile station. The method may further comprise executing the transmission of the wireless communication to the second mobile station if the attempted transmission of the wireless communication to the second mobile station is during an unscheduled time period. The method may further comprise terminating the transmission of the wireless communication to the second mobile station if the attempted transmission of the wireless communication to the second mobile station is during the scheduled time period set to the second mobile station.

In yet another embodiment, a mobile station adapted to process a wireless communication comprises a transceiver adapted to communicate the wireless communication, and a schedule unit adapted to store a user schedule. The mobile station also comprises a processor operatively coupled to the transceiver and the schedule unit, adapted to search the user schedule in the schedule unit and determine whether to communicate the wireless communication based on a result of the search of the user schedule.

The transceiver may receive the wireless communication according to a reception mode, the reception mode being one the group comprising a ring mode, a vibration mode, and a mute mode, the reception mode being determined based on the result of the search of the user schedule. The user schedule may comprise at least one of a user name, a user phone number, a schedule content, a schedule starting date and time, a schedule finishing date and time, a schedule alarm, and a schedule repetition option. The user schedule may be predefined by a user.

The foregoing and other objects, features, aspects and advantages of the present invention will become more apparent from the following detailed description of the present invention when taken in conjunction with the accompanying drawings. It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principles of the invention.
FIG. 1 is a flow diagram illustrating a method for processing a call reception in a mobile station with consideration of a user schedule, according to an embodiment of the present invention.
FIG. 2 is a flow diagram illustrating a method for processing a call transmission in a mobile station with consideration of a user schedule, according to an embodiment of the present invention.
FIG. 3 is a block diagram illustrating a mobile station adapted to process call reception and/or transmission, according to an embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

The term 'mobile station' encompasses mobile phones, handsets, PDAs (personal digital assistants), and computers, as well as any other devices with wireless communication capabilities. Call processing in a mobile station with consideration of a user schedule is described below. Calls may be processed for transmission and/or reception based on a preset user schedule, for example.

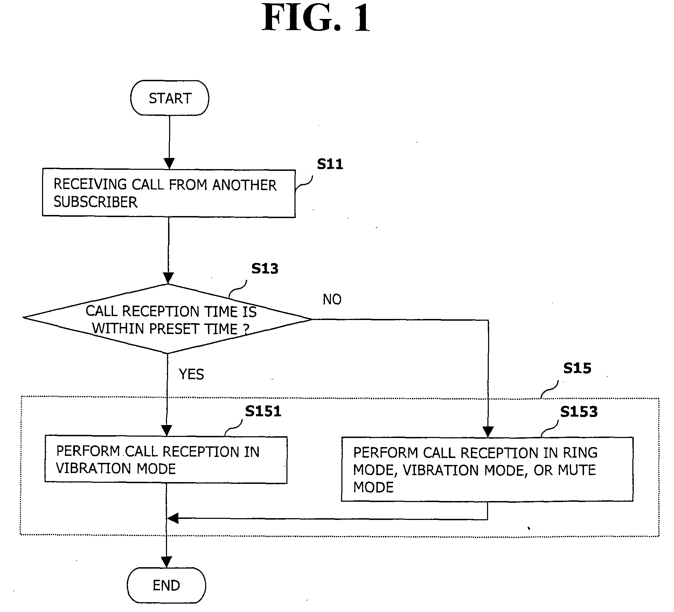

FIG. 1 is a flow diagram illustrating a method for processing a call reception in a mobile station with consideration of a user schedule, according to an embodiment of the present invention.

Referring to FIG. 1, the method for processing a call reception with consideration of a user schedule includes receiving a call from another subscriber (S11), judging whether the call reception time is within a preset time in his own schedule (S13), and performing a preset receiving mode according to the judgment result (S15). The preset receiving mode may be a vibration mode, a sound mode, and/or a mute mode.

When a call is received from a transmission side mobile station (S11), a reception side mobile station judges whether the call reception time is within a preset time of the user schedule registered in the reception side mobile station (S13). The user schedule may be selected from a group of preset user schedules, for example. The user schedule may be processed using a database, for example, to include a user such as the subscriber or other user. The schedule may include user name and telephone number, a starting date and time, a finishing date and time, an alarm option, and/or a repetition option, for example. The alarm option may include a sound mode, a vibration mode, and/or a mute mode (e.g., a flashing light). The repetition option denotes a repetition period of the alarm option.

The reception side mobile station may perform a preset receiving operation on the basis of the judgment result (S15). That is, when the call reception time is within the preset time, the reception side mobile station performs the receiving operation in the vibration mode (S151). By receiving the call in the vibration mode, disturbances and/or interruptions to the user's schedule may be reduced. Alternatively, the call may be received in mute mode.

When the call reception time is not within the preset time, the reception side mobile station judges that the call reception time is not in a period set by the user. The reception side mobile station therefore performs the receiving operation in a preset mode, such as a ring mode, for example. Alternatively, the call may be received in the vibration mode or the mute mode (S153).

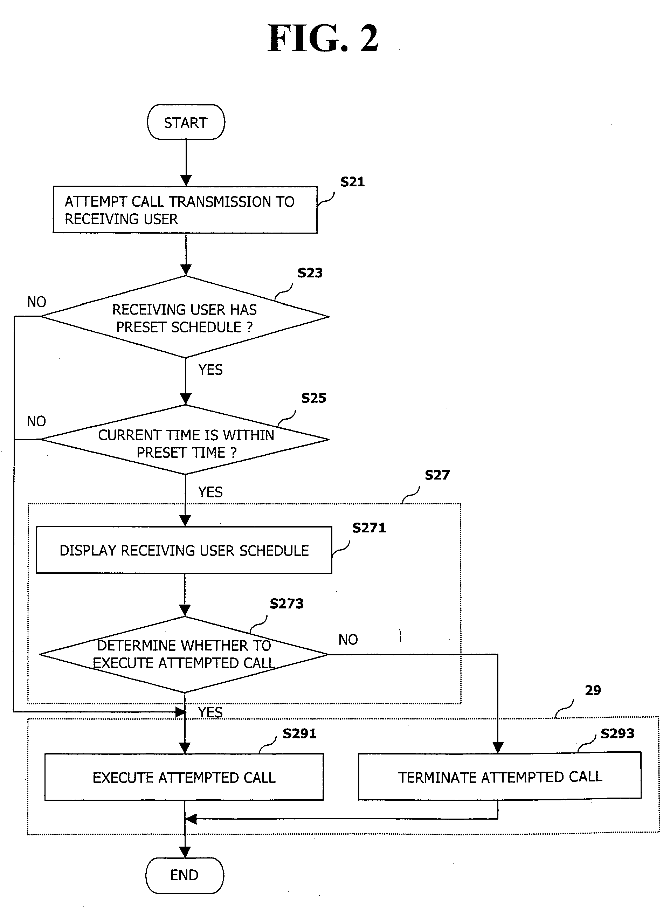

FIG. 2 is a flow diagram illustrating a method for processing a call transmission in a mobile station with consideration of a user schedule, according to an embodiment of the present invention.

Referring to FIG. 2, the method for processing a call transmission with consideration of a user schedule includes attempting a call transmission to a receiving user (S21), determining whether the receiving user's mobile station includes a preset schedule (S23), judging whether the current time is within a preset time in the receiving user's schedule if the receiving user's mobile station includes a preset schedule (S25), displaying the receiving user's preset schedule if the current time is within the preset time in the receiving user's preset schedule and judging whether to execute the attempted call (S27), and executing the attempted call transmission according to the judgment result (S29).

The method for processing a call transmission with consideration of a user schedule is described in detail below. The user inputs the receiving user's telephone number to the transmission side mobile station and presses a send button. The transmission side mobile station then attempts a call transmission to the reception side mobile station (S21). The transmission side mobile station then determines whether the reception side mobile station includes a preset receiving user schedule (S23). If the reception side mobile station includes a preset receiving user schedule, the transmission side mobile station judges whether the current time is within a preset time period in the receiving user schedule.

If the current time is not within a preset time period in the receiving user schedule, the attempted call transmission is executed. If the current time is within a preset time period in the receiving user schedule, transmission side mobile station displays the receiving user's schedule on a display unit (S271), and judges whether to execute the attempted call transmission based on a user selection (S273). Since the transmission side mobile station executes the attempted call transmission based on the judgment result (S29), disturbances and/or interruptions to the receiving user may be reduced. That is, when the transmission side mobile station judges that the attempted call transmission is to be executed based on the user selection, the transmission side mobile station executes the attempted call transmission (S291). However, when the transmission side mobile station judges that the attempted call transmission is not to be executed, based on the user selection, the transmission side mobile station terminates the attempted call transmission (S293).

The scheduler function of the present invention may also include permissions to receive a call from a certain telephone number (or caller) during a certain time period. For example, the schedule may be set to enable reception of a call from caller 'John Doe', between 2-3 pm, for example.

In one embodiment, a method for processing a wireless communication in a mobile station comprises receiving an incoming call signal that indicates that the wireless communication is available for reception by the mobile station. The method also comprises searching a schedule set to the mobile station and determining whether the incoming call signal is received during a scheduled time period set to the mobile station. The method also comprises determining a reception mode for the reception of the wireless communication at the mobile station based on whether the incoming call signal is received during the scheduled time period set to the mobile station.

The reception mode may be one the group comprising a ring mode, a vibration mode, and a mute mode. The schedule set to the mobile station may be predefined by a user. The method may further comprise receiving the wireless communication in vibration mode or mute mode if the incoming call signal is received during the scheduled time period set to the mobile station. The method may further comprise receiving the wireless communication in ring mode if the incoming call signal is received during an unscheduled time period. The schedule set to the mobile station may comprise at least one of a user name, a user telephone number, a schedule content, a schedule starting date and time, a schedule finishing date and time, a schedule alarm, and a schedule repetition option. The schedule set to the mobile station may also comprise a telephone number from which the wireless communication may be received during the scheduled time period set to the mobile station.

In another embodiment, a method for processing a wireless communication in a mobile station comprises attempting transmission of the wireless communication from a first mobile station to a second mobile station. The method also comprises searching a schedule set to the second mobile station and determining whether the attempted transmission of the wireless communication to the second mobile station is during a scheduled time period set to the second mobile station. The method also comprises determining whether to execute the transmission of the wireless communication to the second mobile station based on whether the attempted transmission of the wireless communication to the second mobile station is during the scheduled time period set to the second mobile station.

The method may further comprise displaying, at the first mobile station, the schedule set to the second mobile station. The method may further comprise receiving input from a user of the first mobile station regarding whether to execute the transmission of the wireless communication to the second mobile station, based on the schedule displayed at the first mobile station. The method may further comprise executing the transmission of the wireless communication to the second mobile station if the attempted transmission of the wireless communication to the second mobile station is during an unscheduled time period. The method may further comprise terminating the transmission of the wireless communication to the second mobile station if the attempted transmission of the wireless communication to the second mobile station is during the scheduled time period set to the second mobile station.

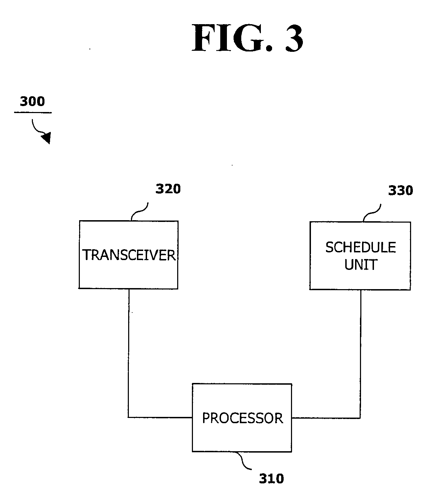

FIG. 3 is a block diagram illustrating a mobile station 300 adapted to process call reception and/or transmission, according to an embodiment of the present invention.

Referring to FIG. 3, the mobile station 300 comprises a transceiver 320 adapted to communicate a wireless communication (e.g., call), and a schedule unit 330 adapted to store a user schedule. The mobile station 300 also comprises a processor 310 operatively coupled to the transceiver 320 and the schedule unit 330, adapted to search the user schedule in the schedule unit 330 and determine whether to communicate the wireless communication based on a result of the search of the user schedule.

The transceiver 320 may receive the wireless communication according to a reception mode, the reception mode being one the group comprising a ring mode, a vibration mode, and a mute mode, the reception mode being determined based on the result of the search of the user schedule. The user schedule may comprise at least one of a user name, a user phone number, a schedule content, a schedule starting date and time, a schedule finishing date and time, a schedule alarm, and a schedule repetition option. The user schedule may be predefined by a user.

The present invention may provide call processing in a mobile station that considers a user schedule. The call processing may be performed such that a call may be processed for transmission and/or reception based on a preset user schedule, thereby enhancing user convenience.

It will be apparent to those skilled in the art that various modifications and variations may be made in the present invention without departing from the spirit or scope of the inventions. Thus, it is intended that the present invention covers the modifications and variations of this invention provided they come within the scope of the appended claims and their equivalents.

## Claims

1. A method for processing a wireless communication in a mobile station, the method comprising:
receiving an incoming call signal that indicates that the wireless communication is available for reception by the mobile station;
searching a schedule set to the mobile station and determining whether the incoming call signal is received during a scheduled time period set to the mobile station;
determining a reception mode for the reception of the wireless communication at the mobile station based on whether the incoming call signal is received during the scheduled time period set to the mobile station.

2. The method of claim 1, wherein the reception mode is one the group comprising a ring mode, a vibration mode, and a mute mode.

3. The method of claim 1, wherein the schedule set to the mobile station is predefined by a user.

4. The method of claim 2, further comprising:
receiving the wireless communication in vibration mode or mute mode if the incoming call signal is received during the scheduled time period set to the mobile station.

5. The method of claim 2, further comprising:
receiving the wireless communication in ring mode if the incoming call signal is received during an unscheduled time period.

6. The method of claim 3, wherein the schedule set to the mobile station comprises at least one of a user name, a user telephone number, a schedule content, a schedule starting date and time, a schedule finishing date and time, a schedule alarm, and a schedule repetition option.

7. The method of claim 1, wherein the schedule set to the mobile station comprises a telephone number from which the wireless communication may be received during the scheduled time period set to the mobile station.

8. A method for processing a wireless communication in a mobile station, the method comprising:
attempting transmission of the wireless communication from a first mobile station to a second mobile station;
searching a schedule set to the second mobile station and determining whether the attempted transmission of the wireless communication to the second mobile station is during a scheduled time period set to the second mobile station;
determining whether to execute the transmission of the wireless communication to the second mobile station based on whether the attempted transmission of the wireless communication to the second mobile station is during the scheduled time period set to the second mobile station.

9. The method of claim 8, further comprising:
displaying, at the first mobile station, the schedule set to the second mobile station; and
receiving input from a user of the first mobile station regarding whether to execute the transmission of the wireless communication to the second mobile station, based on the schedule displayed at the first mobile station.

10. The method of claim 8, further comprising:
executing the transmission of the wireless communication to the second mobile station if the attempted transmission of the wireless communication to the second mobile station is during an unscheduled time period.

11. The method of claim 8, further comprising:
terminating the transmission of the wireless communication to the second mobile station if the attempted transmission of the wireless communication to the second mobile station is during the scheduled time period set to the second mobile station.

12. The method of claim 8, wherein the schedule set to the mobile station is predefined by a user.

13. The method of claim 12, wherein the schedule set to the second mobile station comprises at least one of a user name, a user telephone number, a schedule content, a schedule starting date and time, a schedule finishing date and time, a schedule alarm, and a schedule repetition option.

14. A mobile station adapted to process a wireless communication, the mobile station comprising:
a transceiver adapted to communicate the wireless communication;
a schedule unit adapted to store a user schedule; and
a processor operatively coupled to the transceiver and the schedule unit, adapted to search the user schedule in the schedule unit and determine whether to communicate the wireless communication based on a result of the search of the user schedule.

15. The mobile station of claim 14, wherein the transceiver receives the wireless communication according to a reception mode, the reception mode being one the group comprising a ring mode, a vibration mode, and a mute mode, the reception mode being determined based on the result of the search of the user schedule.

16. The mobile station of claim 14, wherein the user schedule comprises at least one of a user name, a user telephone number, a schedule content, a schedule starting date and time, a schedule finishing date and time, a schedule alarm, and a schedule repetition option.

17. The mobile station of claim 14, wherein the user schedule is predefined by a user.
